# EUROPEAN PATENT APPLICATION

(11) **EP 4 618 027 A1**
(43) Date of publication of application: **17.09.2025**
(21) Application number: 24163015.1
(22) Date of filing: 12.03.2024
(51) Int. Cl.: G06T 17/00

(54) **THREE DIMENSIONAL PERCEPTUAL HASH**

(71) Applicant: Siemens Aktiengesellschaft, 80333 München (DE)
(72) Inventor: Prummer, Michael, 80639 München (DE); Regnath, Emanuel, 81249 München (DE)
(74) Representative: Siemens Patent Attorneys

(57) **Abstract**

Methods and systems for efficiently generating and verifying 3D perceptual hashes of 3D models are provided. Embodiments include providing a 3D model of an object, the 3D model including a plurality of mesh vertices; finding a minimal bounding sphere substantially enclosing the plurality of mesh vertices and having a center corresponding to the center of mass of the object; calculating, based on the minimal bounding sphere, one or more sub-spheres concentric with the minimal bounding sphere and evenly distributed inside the minimal bounding sphere. Further, for each sphere: projecting one or more normal vectors from the center of the sphere to one or more object faces intersecting the sphere; calculating, based on the one or more normal vectors, one or more first distances from the center of the sphere to the one or more object faces; extending the one or more normal vectors up to a radius of the sphere to project the one or more normal vectors as one or more dome points on the sphere; calculating one or more second distances between the one or more dome points; and then mapping the one or more first and second distances corresponding to all spheres to a hash space to generate a 3D perceptual hash value of the 3D model.

## Description

### Technical filed

The present disclosure relates to the technical field of hashing, and specifically to methods and systems for generating and verifying hashes of three dimensional (3D) models of physical objects.

### Background

Digital twins with 3D models are the backbone of industrial applications such as digital process automation (e.g., Cyber-Physical Systems), physical simulations, Computer Aided Design (CAD), and additive manufacturing (e.g., 3D printing). Recent trends, such as the industrial metaverse, are driven by virtual and augmented reality that require the secure exchange of high-quality 3D models. Parts of these trends are also distributed and collaborative marketplaces for trading 3D assets, which will further increase the demand for searching, comparing, and exchanging 3D models.

To build such decentralized ecosystems that evolve around the general exchange of 3D assets, users must trust a platform's capabilities to protect their ownership rights, which is currently an open problem. To efficiently detect, compare, and protect the unique features of 3D models, hashing algorithms must capture the relevant features of a 3D model with a small amount of information, much like a digital fingerprint. Conventionally, perceptual hashes have been successfully used for two-dimensional (2D) images but for 3D models only limited approaches are available.

There are various conventional methods around creating fingerprints for 3D models, but every method comes with different drawbacks. For example, one of the methods ([1]) tries to catch the features of a 3D model based on a Fast Fourier Transformation (FFT) on the plane slices around every axis of the 3D model. After extracting the FFT peaks and mapping them to a grid, hundreds of fingerprints (hashes) are generated based on feature vectors to identify the model for each possible rotation. However, as the first step already involves slicing the model along a straight surface, this is majorly affected by the rotation of the model. Even a slight rotation can alter the result significantly. As a solution, the authors of [1] proposed to slice the model at every angle, which however causes immense computation, storage, and increased false positives.

Further, in another approach ([2]) a minimal spanning tree is calculated on the vertices of the 3D model. The spanning tree was used to capture the vertex-based features of the 3D model. While the original models are recognized, the false-positive rate is remarkably high with complete unrelated models reaching up to 89% similarity with a dataset of just five models. Further, the collision probability is quite high even for a very small dataset. This method is not robust.

Yet another approach ([3]) tries to generate a robust 3D model hash using object feature vectors and normalized vertex distances. By grouping distances, permuting indices, and binarizing feature values, the method enhances robustness against graphics attacks and irregular model representations. However, this approach is computationally intensive since the approach seeks to select objects with a high surface area ratio and uses them to extract the feature objects. Moreover, this method does not holistically account for all the features of the 3D model since it splits main and minor objects of the same 3D model.

Various other approaches ([4]) combine deep learning methods with shape retrieval. However, deep and machine learning models are often limited to the dataset they were initially trained. As a robust approach needs to be data-independent, neural networks are not aligned with general requirements as it is desired to support generic models and not a specific dataset that needs to be trained beforehand.

Therefore, there is a need for a data-independent, rotation and scale robust method for 3D perceptual hash generation and verification without involving high computation and storage requirements.

### Summary

The present disclosure is defined by the independent claims. Dependent claims describe embodiments thereof. This summary is provided to introduce a selection of concepts in a simplified form that are further described below in the detailed description. This summary is not intended to identify key features or essential features of the claimed subject matter, nor is it intended to be used to limit the scope of the claimed subject matter.

The present disclosure provides a novel approach based on geometry features to generate a compact 3D hash, which is robust against common tampering attacks, which captures the perception of a 3D model or CAD data, to detect counterfeits, and which can be easily computed and verified. Accordingly, as known from 2D perceptual hashing, the output should not change if just a slight part of the model was manipulated for example via rotations, translations, scaling, and/or minor additions/removal of vertices. Thus, the present disclosure describes a rotation-robust 3D model hash that may yield the same hash in any of the orientations in which the 3D model is provided. The same holds for uniform scaling.

The present disclosure describes an algorithm based on intersection points between the 3D model and multiple, various-sized spheres around a common center point, much like "onion slices", encompassing most of the 3D model as the core of the 3D perceptual hash calculation (dubbed "3D Onion Hash").

Embodiments of the present disclosure are generally directed to solutions that enable efficient generation and verification of robust 3D perceptual hashes based on 3D models of physical objects. Accordingly, a computer-implemented method for generating a 3D perceptual hash is provided. The method may comprise:
providing a 3D model of an object, the 3D model including a plurality of mesh vertices;
finding a minimal bounding sphere substantially enclosing the plurality of mesh vertices and having a center corresponding to the center of mass of the object, calculating, based on the minimal bounding sphere, one or more sub-spheres concentric with the minimal bounding sphere and evenly distributed inside the minimal bounding sphere; for each sphere:
   finding one or more object faces intersecting the sphere;
   projecting one or more normal vectors from the center of the sphere to the one or more object faces;
   calculating, based on the one or more normal vectors, one or more first distances from the center of the sphere to the one or more object faces;
   extending the one or more normal vectors up to a radius of the sphere to project the one or more normal vectors as one or more dome points on the sphere;
   calculating one or more second distances between the one or more dome points; and
mapping the one or more first and second distances corresponding to all spheres to a hash space to generate a hash value of the 3D model.

Thus, the method described above may provide a perceptual 3D hash that is robust to modifications such as rotations, translations, or uniform scaling.

In some embodiments, finding the minimal bounding sphere may comprise calculating the center of mass of the object, sorting all mesh vertices of the 3D model in a k-dimensional tree to select a maximum number of the closest mesh vertices to the center of mass of the object, and generating the minimal bounding sphere as a convex hull from the selected maximum number of the closest mesh vertices. Thus, by establishing the center of the object and calculating the minimal bounding sphere robustness to common tampering attacks may be improved.

In one or more embodiments, the hash value may comprise a distance hash value corresponding to the one or more first distances and an angle hash value corresponding to the one or more second distances, and each one of the distance and angle hash value may be represented as a vector with a length proportional to a total number of spheres.

In one or more embodiments, the method may further comprise calculating a first median of the one or more first distances, clustering the one or more dome points of each sphere to obtain one or more cluster centers, calculating minimum distances of all cluster centers to each other, calculating a second median of the minimum distances between the one or more cluster centers, and mapping the first median distance to the hash space to generate a first hash value of the 3D model and the second median to the hash space to generate a second hash value of the 3D model. Clustering may reduce the number of duplicates and nearduplicates (very close dome points).

In some embodiments, the method may optionally comprise filtering out one or more outlier mesh vertices and/or one or more disconnected mesh vertices. This way disconnected meshes can be treated as separate models for a more detailed matching and better tamper resistance.

In one or more embodiments, the one or more sub-spheres may be evenly distributed inside the minimum bounding sphere toward the center of mass of the object down to a minimum threshold of a radius of the minimum bounding sphere; and/or the one or more sub-spheres have smaller radii than the radius of the minimal bounding sphere. Thus, by projecting multiple spherical sliced layers of intersection points a geometry-based approach is provided that generates compact and tamper-resistant fingerprints for a 3D model by capturing the geometrical features of the 3D model.

In one or more embodiments, clustering the one or more dome points of each sphere to obtain the one or more cluster centers may comprise using a DB-Scan clustering algorithm with a range parameter chosen as a threshold percentage of a radius of the sphere to cluster the one or more dome points with a minimum of one point per cluster. This way by using one minimum point for clustering ensures that every unique dome point is captured in a cluster group.

In some embodiments, one or more dome points may have an associated weight expressing an importance of the dome point by object face area, and wherein clustering the one or more dome points may further comprise filtering the one or more dome points based on the associated weights relative to a minimum weight threshold. Saving an associated weight for every dome point, which expresses the importance of the dome-point by face area increases the resistance against geometry modifications such as inserting small faces in random locations or applying various filters like bevels on edges, since modifications of small areas can be weighted less.

In one or more embodiments, when a sphere does not intersect any of the object faces of the 3D model, the method may further comprise mapping a zero value corresponding to the sphere to the hash value of the 3D model. For example, if a sphere does not intersect with any face because of a hole in the model or the sphere is complete inside a volume, this is expressed by a zero later in the hash. This way computation of the 3D hash value may be sped up.

In one or more embodiments, the hash value of the 3D model may be a 3D perceptual hash value. As an exact file hash can be easily manipulated, a perceptual hash for the 3D model can increase the required manipulation effort, thus increasing the robustness of the hashing methods for generating and verifying hashes of 3D models.

In one or more embodiments, the hash value of the 3D model may comprise a distance hash corresponding to the one or more first distances and an angle hash corresponding to the one or more second distances, and each one of the distance and angle hash value may be represented as a vector with a length proportional to a total number of spheres used to generate the hash value. A distance hash may capture object face distances and may help in distinguishing the proportions of the model, so that the distance hash value does not change for rotations. An angle hash on the other hand may capture the angles of object faces to each other and has the advantage that it is not sensitive to a uniform resizing of the model.

In some embodiments, the method may further comprise saving the hash value in a hash database. This may help in providing fast queries for hashed 3D models based on the hash values. For example, one may also search for similar 3D models in the database with a low or the same distance hash in some or all parts of the 3D model. For example, if a specific industrial part is needed for purchase, a similarity search with the 3D model can yield the product and closely related alternatives based on the saved hash value.

In one or more embodiments, the method may further comprise binding the hash value of the 3D model to a non-fungible token, NFT, by calculating an unique cryptographic hash, and storing both the 3D perceptual hash and the cryptographic hash in the hash database or on a blockchain inside the NFT. The resulting compact 3D perceptual hash may represent the link between an asset and a digital ledger entry tracking ownership and IP rights. Hence, if a model is prepared for exchange, it can be hashed and checked for authenticity. By combining the hash and token, the user can transparently prove the ownership of the asset to another party.

Other embodiments include a computer-implemented method for verifying 3D hash values of 3D models, comprising:
providing a first hash value and a second hash value, wherein the first and second hash value are generated according to any one of the methods described above, and wherein the first and second hash values are vectors having an equal length corresponding to a total number of spheres used to generate the hash values;
for all elements in the first and second hash value vectors:
   calculating a distance between each element of the first hash value vector and a corresponding element of the second hash value vector;
   comparing each element of the first hash value vector with the corresponding element of the second hash value vector to find the element larger than the other;
   normalizing the distance with the larger element to obtain a hash norm; and
calculating a matching percent by summing all the hash norms and dividing by the length of the vectors.

Other embodiments may include another computer-implemented method for verifying 3D hash values of 3D models, comprising:
providing a first hash value and a second hash value, wherein the first and second hash value are generated according to any one of the methods described above, and wherein the first and second hash values are vectors having an equal length corresponding to a total number of spheres used to generate the hash values;
for all elements in the first and second hash value vectors:
   calculating a distance between each element of the first hash value vector and a corresponding element of the second hash value vector;
   obtaining a distance norm as an average of all the distances; and
   calculating a matching percent by normalizing the distance norm with a predefined threshold value defining a maximum allowed difference two hash value vectors can have to count as similar.

The methods described above for verifying 3D perceptual hash values with one another provide quick and efficient ways of detecting counterfeits of 3D models. The first verification method normalizes the (onion) slice distance with the larger value of each (onion) slice comparison and returns the sum of all distances divided by the total number of slices (spheres). Length-based normalization makes it more tolerant to changes. The second similarity method uses a configurable threshold parameter to restrict the allowed distance to slices. Hence, the configurable threshold can be configured for each use case to be more or less strict.

Other embodiments may include a computer-implemented method for managing access to 3D models. The method may comprise:
receiving a first request to create a first hash value for a first 3D model;
generating the first hash value according to any one of the methods described above;
storing the first hash value in a hash database;
storing the first 3D model in a model database;
receiving a second request including a second hash value to access the first 3D model based on the second hash value;
verifying whether the second hash value corresponds to the first 3D model based on a matching percent between the first hash value and the second hash value calculated according to any one of the methods described above; and
if the matching percent is above a matching threshold, granting access to the first 3D model in the model database in response to the second request.

Other embodiments may include a system for managing access to 3D models, comprising:
a hash database for storing a plurality of hash values;
a model database for storing a plurality of 3D models;
one or more processing devices; and
one or more storage devices, the one or more storages devices storing computer-readable instructions that, when executed by the one or more of the processors, may cause the one or more of the processors to perform the method described above.

Other embodiments may include a computer-readable storage medium storing instructions which when executed by at least one processor, may cause the at least one processor to perform the method according to any one of the methods described above.

Other embodiments may include a computer program product comprising instructions which when executed by at least one processor, may cause the at least one processor to perform the method according to any one of the methods described above.

### Brief description of the drawings

Aspects, features, and benefits of various embodiments of the present disclosure will become apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Fig. 1 is a schematic diagram illustrating a method for generating 3D hash values based on 3D models, according to the present disclosure.
Fig. 2A-2D are schematic diagrams illustrating in a 2D view one or more steps of the method of Fig. 1, according to the present disclosure.
Fig. 3A-3F are schematic diagrams illustrating an intersection step of each of the "onion" slices/spheres with the 3D model, according to the method of Fig. 1.
Fig. 4A-4F are schematic diagrams illustrating a projection step of a plurality of dome points on each one of the "onion" slices/spheres, according to the method of Fig. 1.
Fig. 5 is a schematic diagram illustrating a system for managing access to 3D models, according to the present disclosure.

### Detailed description

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

The present disclosure solves the problem of generating data-independent, rotation-, and scale-resistant fingerprints of 3D models that have a low computation and storage requirement with very low collision probability. An efficient geometry-based approach is provided to generate and verify 3D perceptual hashes with a defined size of, for example, two bytes, that is resistant against a set of tampering attacks.

A robust 3D perceptual hash is generated by extracting geometric features of a selected set of vertices from the 3D model and mapping them to sphere domes of N spherical slices, which are arranged much like onion slices. The created dome points may be weighed by their size and clustered, with the resulting median distance between each cluster center for each slice resulting in a distinctive feature mapped to a hash space, e.g. of 2¹⁶ - 1. The resulting compact 3D perceptual hash (dubbed herein "3D onion hash") of size *N* * 8 bytes can represent the link between an asset and a digital ledger entry tracking ownership and IP rights. Hence, if a 3D model is prepared for exchange, it can be hashed and checked for authenticity. By combining the 3D perceptual hash with a token (e.g. a non-fungible token, NFT) an immutable token may be obtained, with which the user can transparently prove the ownership of the asset to another party using blockchain technology. With the 3D hash value, it may also be possible to search for similar models in a database with a low or the same distance in some or all parts of the 3D model. For example, if a specific industrial part is needed for purchase, a similarity search with the model can yield the product and closely related alternatives.

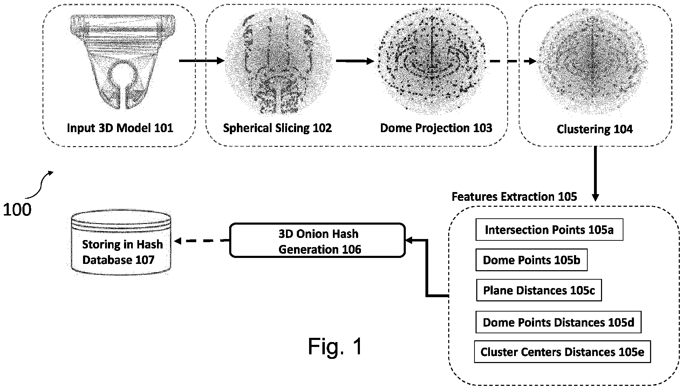

Fig. 1 is schematic diagram illustrating a computer-implemented method (100) for generating 3D hash values based on 3D models, according to one or more embodiments of the present disclosure. In step 101, a 3D model is provided in any conventional 3D format, such as Standard Tessellation Language (STL) format. For example, users and applications may request generation of 3D perceptual hash values based on provided 3D models. In a spherical slicing step 102, the 3D model may be fitted with a plurality of concentric spheres (or slices) starting from a calculated minimal bounding sphere on a pre-selected set of vertices and going towards a center of the 3D model representing a physical object (e.g. in Fig. 1, Figs. 3A-3F, and Figs. 4A-4F the 3D model of a clip for holding a cable or a pipe is inputted for hashing). For example, for calculating the center of the 3D model, all vertices of the input 3D model may be sorted by the distance to the model's initial center of mass to establish a canonical coordinate system with a fixed center and radii that may be used as a reference point for all following calculations. For example, the initial center of mass of the 3D model may initially be calculated by any conventional technique. The mesh vertices may be sorted in a *k* -dimensional tree to select a configurable majority (e.g., 51%, 65%, 75-95%, 99%, etc.) of the closest points to the center of mass and may cut out outliers. Building a *k*d-tree takes *O*(*n* * *log*(*n*)), so it is computationally inexpensive. Optionally, disconnected meshes may be treated, in a preprocessing step, as separate models for a more detailed matching and better tamper resistance. A convex hull is generated from the point selection and used to calculate the minimal bounding sphere. Depending on the required granularity and size of the hash, a total number of spheres *N* may be set with a tradeoff between captured details, storage size, and calculation time. For example, if a sphere does not intersect with any face because of a hole in model or the sphere is complete inside a volume, this is expressed by a zero later in the hash. The final hash length is proportional to the number of spheres, and *N* can be increased to capture more details. From the calculated minimal bounding sphere, the remaining *N* - 1 spheres may be equally distributed up to a most inside sphere with, for example, 20% of the maximum sphere radius of the minimal bounding sphere, assuring a stepwise capturing of the whole 3D model. The model is split into multiple intersecting slices by the concentric spheres, where each sliced object face is extracted with its center point and normal vector. Hence, minor offsets in the calculated center will still select the same or close object faces and may have less impact on the final hash.

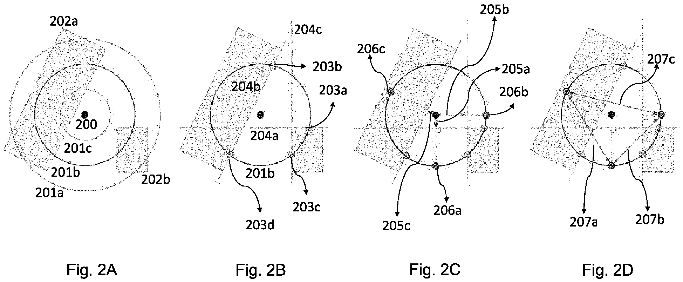

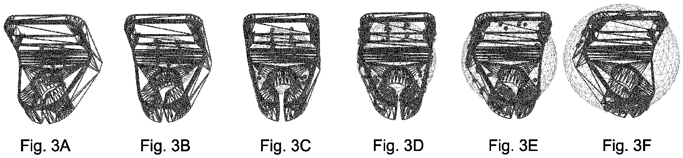

The spherical slicing step 102 may be better visualized with respect to Figs. 2A-2C illustrating a 2D view of the method with N=3 spheres (201a-201c) and Figs. 3A-3F showing in a 3D view the intersection points for N=6 spheres from a smallest sphere in Fig. 3A to the minimal bounding sphere in Fig. 3F surrounding the 3D model almost completely. Fig. 2B shows intersection points (105a, 203a-c) of a sphere (201b) to object faces (204a-c). Fig. 2C shows normal vectors from the center (200) of the spheres to each of the object face (204a-c) and first distances (205a-c) calculated from the center (200) to the object faces (204a-c). As the first distances (205a-c) are calculated based on sphere intersection values and avoid using coordinates and plane slices (i.e. 2D mapping), resistance against rotation is ensured. A median of the first distances (205a-c) may be used later as a first hash value (representing a "distance hash") of the hash value. The distance hash value thus distinguishes the proportions of a mesh.

In a dome projection step 103, the one or more normal vectors are extended up to a radius of each sphere to project the one or more normal vectors as one or more dome points (105b, 206a-c) on the sphere. As a result, the intersecting geometry is mapped to the sphere. For every dome point, a weight is saved, which expresses the importance of the dome point by object face area and may increase resistance against geometry modifications such as inserting small faces in random locations or applying various filters such as bevels on edges, and thus modifications of small areas can be weighted less. Dome points express a sphere intersection's angle characteristics without considering the model size. For example, two cubes of different sizes will have the same angle features but different edge lengths, still resulting in the same hash. Thus, one or more second distances (105d, 207a-c) between the one or more dome points (105b, 206a-c) are calculated and an average or a median of the second distances (105d, 207a-c) may be used later as a second hash value (representing an "angle hash") of the hash value. The angle hash value thus expresses the angle characteristics of the 3D model and is resistant to uniform scaling modifications of models.

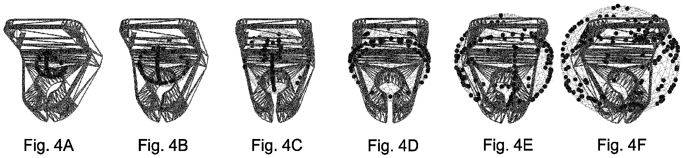

The dome projection step 103 may be better visualized with respect to Figs. 2A-2D illustrating a 2D view of the method with N=3 spheres (201a-201c) and Figs. 4A-4F showing in a 3D view the projected dome points for N=6 spheres from a smallest sphere in Fig. 4A to the minimal bounding sphere in Fig. 4F surrounding the 3D model almost completely. Fig. 2C shows dome points (105b, 206a-c) projected on the sphere (201b). Fig. 2D shows further the second distances (105d, 207a-c).

Parallel object faces have the same normal vector orientations and will project the same dome points resulting in many duplicates. In an optional clustering step 104, the one or more dome points (105b, 206a-c) may be clustered for each sphere to reduce the number of duplicates and to group closely overlapping points. The DBSCAN algorithm ([5]) may be used with a relative range R as a percentage of each sphere radius to cluster the points with a minimum of one point per cluster. Using one minimum point for clustering ensures that every unique dome point is captured in a cluster group. Cluster centers and their minimum distance to each other for each sphere are calculated. The median of these minimum distances expresses the most common geometry in terms of angles for an intersecting sphere and is the base for the "onion" angle hash value.

In a features extraction step 105, the intersection points (105a, 203a-c), the dome points (105b, 206a-c), plane distances (105c) (i.e. the first distances (250a-c)), dome points distances (105d) (i.e. the second distances (207a-c), and/or cluster centers distances (105e) (or a median of the minimum cluster centers distances) may be extracted. Thus, the angle hash may be based on the median of the cluster centers distances (105e) and the distance hash on the median plane distances (105c).

In step 106, a 3D onion hash value is generated based on one or more of the extracted features. For example, to generate a fixed-sized hash value out of the median minimum cluster center distances for the angle hash and the plane distances for the distance hash, the two hash values may be mapped to a hash space *H* of 2¹⁶ - 1 = 65535 where each slice value is multiplied by 2 * *N(radius)*/*H,* wherein *N*(*radius*) is a radius of each slice. The result is a 2 * *N* bytes hash array of *N* integers between 0 - 65535 for both hashes, where each distance is encoded using 2 bytes. For example, a distance hash with N = 6 may yield a vector output [2407, 2330, 2446, 2144, 2123, 1924] which may be hex-encoded as 0967-091a-098e-0860-084b-0784. Same may apply to an angle hash.

In one or more embodiments, according to the present disclosure, the way the 3D hash value is created and used may be configured by a user. The hash generation may thus be configurable with three main parameters affecting the hash length, captured details, and storage size. First, the number of spheres *N* determines the slices of the 3D model, where every slice outputs one integer each for the distance and angle hash. The cluster radius range *R* for dome points sets the minimal distance in the clustering step 104. The last parameter, *W*, expresses the minimum weight that a dome point needs to reach compared to the average object face size of the 3D model to be included in the cluster.

In one or more embodiments, the 3D perceptual hash value generated in step 106 may be stored in a hash database in a final step 107.

Other embodiments, according to the present disclosure, may include methods for verifying/checking similarities of 3D hash values of 3D models as exemplarily described in the following two algorithms. Both algorithms calculate a similarity of two (onion) 3D perceptual hashes of a processed 3D model by comparing a distance from one slice to another, wherein the two onion hashes must preferably be of the same size N to get optimal results.

The first algorithm may normalize each slice distance with the larger value of each slice comparison and may return the sum of all distances divided by *N.* Length-based normalization makes the algorithm more tolerant to changes.

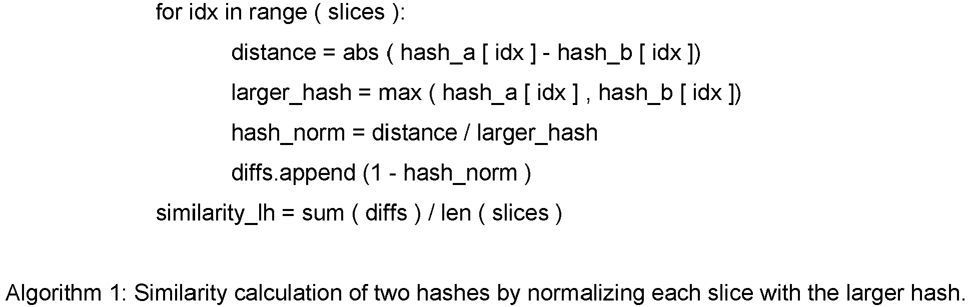

The second similarity algorithm may use a configurable threshold parameter T to restrict the allowed distance between slices. Hence, the tolerance may be configured for each use case to be more or less strict.

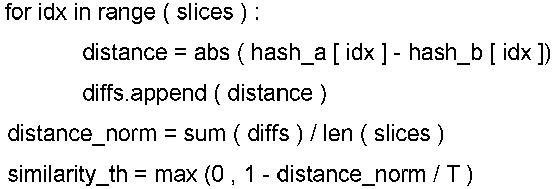

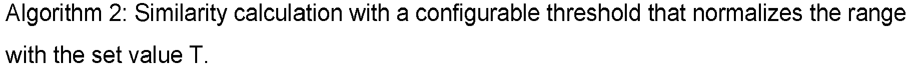

Further in one or more examples, the single hash values in the vector hash value output are not just arbitrary values but relate to a slice's most prevalent feature distribution. For example, some properties such as a 90° angle, appear frequently in industrial parts and relate to a specific hash value. For example, a primitive cube can be expressed with the value [46340] as it has merely 90° angles. A torus object may have a zero slice as the smallest sphere (e.g. out of N=3 total spheres) does not have any intersection in the middle (e.g. [0, 3034, 4140], while a plane or, e.g., a flat sliced cylinder, results in a maximum distance of [65535] as the dome points are equally distributed and symmetrically on both sides. The slice values may thus be used to search for a specific angle distribution. In another example, setting loose parameters e.g., for the matching threshold, will yield in response to a query on the hash database, all similar models to an input hash, enabling a partial similarity search. Moreover, a number distribution of a single slice of an onion 3D hash expresses the most prevalent geometric angle or distance feature. This property may be used for fast queries in large databases, directly searching for specific properties encapsulated in the slice number instead of querying a list of similar objects.

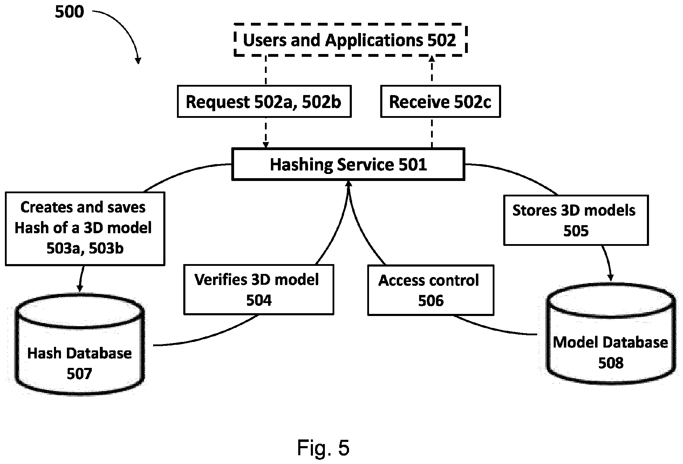

Fig. 5 schematically shows a system (500) for providing a hashing service (501) such as managing access to 3D models, according to the present disclosure. For example, in the context of a decentralized economy, it is essential to detect counterfeits and enable a secure exchange of assets and licenses. A tamper-proof 3D hash as described herein may be used to protect the intellectual property of a creator and generate a tamper-proof link between a 3D model and a smart contract of a tokenized asset. As the exact file hash can be easily manipulated, a perceptual 3D hash like the onion hash described herein can increase the required manipulation effort. For example, a 3D onion hash may represent the link between an asset and a digital ledger entry tracking ownership and IP rights. Hence, if a 3D model is prepared for exchange, it can be hashed and checked for authenticity. By combining the 3D perceptual hash with a token (e.g. a non-fungible token, NFT) an immutable token may be obtained, with which the user can transparently prove the ownership of the asset to another party using blockchain technology.

The hashing service (501) may accept a first request (502a) from a user or an application (502) to create a 3D onion hash value for a first 3D model for example of an industrial part or any other 3D physical object. Next, a first hash value may be generated (503a) according to the present disclosure and saved (503b) in a dedicated hash database (507). This repository ensures that the first hash value remains accessible for future reference and validation. Simultaneously or sequentially, the first 3D model itself may be stored in a separate model database (508). This repository houses the actual geometric data, textures, and other relevant information associated with the 3D model. At a later point, a second request (502b) that includes a second hash value may be received from another user or application (502). The purpose of the second request may be to access the first 3D model based on the provided second hash value. To ensure data integrity, a verification step (504) may compare the second hash value with the first hash value by assessing a matching percentage between the two hash values according to the present disclosure. If the matching percentage surpasses a predefined threshold, access may be granted to the other user or application to the first 3D model stored in the model database (508). Thus, the hashing service (501) streamlines the handling of 3D models by utilizing hash values, ensuring both security and efficiency in the process.

In one example configuration, the system (500) may include at least one processing unit (or processor) and memory. The processor may comprise one or more microprocessors, microcontrollers, hardware circuits, discrete logic circuits, hardware registers, digital signal processors (DSPs), field-programmable gate arrays (FPGAs), application-specific integrated circuits (ASICs), programmable logic controllers (PLCs) or a combination thereof. For example, the processor and memory unit may be incorporated into the system (500) or may be a computer or computer communicatively linked thereto. The processor may be programmable hardware capable of executing software instructions stored (to perform the methods described herein), e.g., as a machine-readable computer program in the memory. The memory may comprise any non-transitory machine-readable media known in the art or that may be developed, whether volatile or non-volatile, including but not limited to solid state media (e.g., SRAM, DRAM, DDRAM, ROM, PROM, EPROM, flash memory, solid state drive, etc.). Further, the system (500) may also include storage devices including, but not limited to removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination. Similarly, the system (500) may also have input device(s) such as keyboard, mouse, pen, voice input, etc. and/or output device(s) such as a display, speakers, printer, etc. Also included in the system (500) may be one or more communication connections, such as LAN, WAN, point to point, etc. In embodiments, the connections may be operable to facilitate point-to-point communications, connection-oriented communications, connectionless communications, etc. The system (500) may further include interface circuitry configured to control input and output (I/O) data paths of the system (500). For example, such I/O data paths may include data paths for receiving 3D models or 3D hash values from the user or applications (502) and/or for exchanging 3D assets based on verified 3D hash values or 3D models over the one or more communication connections.

The embodiments of the present disclosure provide efficient geometry-based approaches for generating and verifying 3D perceptual hashes of 3D models, which are resistant against most common tampering attacks such as rotation or scaling of the 3D models.

Although the present disclosure has been described in accordance with preferred embodiments, it should be clear for the person skilled in the art that modifications are possible in all embodiments. Further possible implementations or alternative solutions of the invention also encompass combinations - that are not explicitly mentioned herein - of features described above or below regarding the embodiments. The person skilled in the art may also add individual or isolated aspects and features to the most basic form of the present disclosure.

### List of References

[1] D. Mouris, C. Gouert, N. Gupta and N. G. Tsoutsos, "Peak Your Frequency: Advanced Search of 3D CAD Files in the Fourier Domain," in IEEE Access, vol. 8, pp. 141481-141496, 2020, doi: 10.1109/ACCESS.2020.3013284.
[2] K. Tarmissi, "Topological approaches for 3D object processing and applications". Library and Archives Canada = Bibliotheque et Archives Canada, OCLC: 793157407.
[3] Suk-Hwan Lee, Ki-Ryong Kwon, "Robust 3D mesh model hashing based on feature object", Digital Signal Processing, Volume 22, Issue 5, 2012, Pages 744-759, ISSN 1051-2004, https://doi.org/10.1016/i.dsp.2012.04.015.
[4] L. Luciano and A. Ben Hamza, "A global geometric framework for 3d shape retrieval using deep learning," vol. 79, pp. 14-23. [Online]. Available: https://linkinghub.elsevier.com/retrieve/pii/S009784931830195X .
[5] E. Schubert, J. Sander, M. Ester, H. P. Kriegel, and X. Xu, "Dbscan revisited, revisited: why and how you should (still) use dbscan," ACM Transactions on Database Systems (TODS), vol. 42, no. 3, pp. 1-21, 2017.

## Claims

1. A computer-implemented method (100) for three-dimensional, 3D, model hashing, comprising:
providing (101) a 3D model of an object, the 3D model including a plurality of mesh vertices;
finding a minimal bounding sphere (201a) substantially enclosing the plurality of mesh vertices and having a center (200) corresponding to the center of mass of the object;
calculating (102), based on the minimal bounding sphere (201a), one or more sub-spheres (201b, 201c) concentric with the minimal bounding sphere (201a) and evenly distributed inside the minimal bounding sphere (201a);
for each sphere (201a-c):
projecting one or more normal vectors from the center (200) of the sphere (201b) to one or more object faces (204a-c) intersecting the sphere;
calculating, based on the one or more normal vectors, one or more first distances (105c, 205a-c) from the center (200) of the sphere to the one or more object faces (204a-c);
extending the one or more normal vectors up to a radius of the sphere to project (103) the one or more normal vectors as one or more dome points (105b, 206a-c) on the sphere;
calculating one or more second distances (105d, 207a-c) between the one or more dome points (105b, 206a-c); and
mapping the one or more first (105c, 205a-c) and second distances (105d, 207a-c) corresponding to all spheres (201a-c) to a hash space to generate (106) a hash value of the 3D model.

2. The method of claim 1, wherein finding the minimal bounding sphere comprises:
calculating the center of mass of the object;
sorting all mesh vertices of the 3D model in a k-dimensional tree to select a maximum number of the closest mesh vertices to the center of mass of the object; and
generating the minimal bounding sphere as a convex hull from the selected maximum number of the closest mesh vertices.

3. The method of claim 1 or 2, wherein the hash value comprises a distance hash value corresponding to the one or more first distances and an angle hash value corresponding to the one or more second distances; and
wherein each one of the distance and angle hash value is represented as a vector with a length proportional to a total number of spheres.

4. The method of any of the preceding claims further comprising:
calculating a first median of the one or more first distances;
clustering (104) the one or more dome points of each sphere to obtain one or more cluster centers;
calculating minimum distances of all cluster centers to each other;
calculating a second median of the minimum distances between the one or more cluster centers; and
mapping the first median distance to the hash space to generate a first hash value of the 3D model and the second median to the hash space to generate a second hash value of the 3D model.

5. The method of any of the preceding claims optionally comprising filtering out one or more outlier mesh vertices and/or one or more disconnected mesh vertices.

6. The method of any of the preceding claims, wherein the one or more sub-spheres are evenly distributed inside the minimum bounding sphere toward the center of mass of the object down to a minimum threshold of a radius of the minimum bounding sphere; and/or
wherein the one or more sub-spheres have smaller radii than the radius of the minimal bounding sphere.

7. The method of any of the preceding claims, wherein clustering the one or more dome points of each sphere to obtain the one or more cluster centers comprises using a DB-Scan clustering algorithm with a range parameter chosen as a threshold percentage of a radius of the sphere to cluster the one or more dome points with a minimum of one point per cluster.

8. The method of any of the preceding claims, wherein every dome point has an associated weight expressing an importance of the dome point by object face area, and wherein clustering the one or more dome points further comprises filtering the one or more dome points based on the associated weights relative to a minimum weight threshold.

9. The method of any of the preceding claims, further comprising:
if a sphere does not intersect any object faces, mapping a zero value corresponding to the sphere to the hash value of the 3D model.

10. The method of any of the preceding claims, wherein the hash value of the 3D model is a 3D perceptual hash value.

11. The method of any of the preceding claims, further comprising saving the hash value in a hash database.

12. The method of any of the preceding claims, further comprising binding the hash value of the 3D model to a non-fungible token, NFT, to obtain a new hash value, and saving the new hash value in the hash database or on a blockchain to obtain an immutable new hash value.

13. A computer-implemented method for verifying 3D hash values of 3D models, comprising:
providing a first hash value and a second hash value, wherein the first and second hash value are generated according to the method of any of claims 1 to 12, and wherein the first and second hash values are vectors having an equal length corresponding to a total number of spheres used to generate the hash values;
for all elements in the first and second hash value vectors:
calculating a distance between each element of the first hash value vector and a corresponding element of the second hash value vector;
comparing each element of the first hash value vector with the corresponding element of the second hash value vector to find the element larger than the other;
normalizing the distance with the larger element to obtain a hash norm; and
calculating a matching percent by summing all the hash norms and dividing by the length of the vectors.

14. A computer-implemented method for verifying 3D hash values of 3D models, comprising:
providing a first hash value and a second hash value, wherein the first and second hash value are generated according to the method of any of claims 1 to 12, and wherein the first and second hash values are vectors having an equal length corresponding to a total number of spheres used to generate the hash values;
for all elements in the first and second hash value vectors:
calculating a distance between each element of the first hash value vector and a corresponding element of the second hash value vector;
obtaining a distance norm as an average of all the distances; and
calculating a matching percent by normalizing the distance norm with a predefined threshold value defining a maximum allowed difference two hash value vectors can have to count as similar.

15. A computer-implemented method for providing a hashing service (501), comprising:
receiving a first request (502a) to create a first hash value for a first 3D model;
generating (503a) the first hash value according to the method of any of claims 1 to 12;
storing (503b) the first hash value in a hash database (507);
storing (505) the first 3D model in a model database (508);
receiving a second request (502b) including a second hash value to access the first 3D model based on the second hash value;
verifying (504) whether the second hash value corresponds to the first 3D model based on a matching percent between the first hash value and the second hash value calculated according to claim 13 or 14; and
if the matching percent is above a matching threshold, granting access (506) to the first 3D model in the model database (508) in response to the second request (502b).

16. A system (500) for managing access to 3D models, comprising:
a hash database (507) for storing a plurality of hash values;
a model database (508) for storing a plurality of 3D models;
one or more processing devices; and
one or more storage devices, the one or more storages devices storing computer-readable instructions that, when executed by the one or more of the processors, cause the one or more of the processors to perform the method according to claim 15.

17. A computer-readable storage medium storing instructions which when executed by at least one processor, cause the at least one processor to perform the method according to any one of claims 1 to 15.

18. A computer program product comprising instructions which when executed by at least one processor, cause the at least one processor to perform the method according to any one of claims 1 to 15.
